# EUROPEAN PATENT APPLICATION

(11) **EP 1 819 161 A2**
(43) Date of publication of application: **15.08.2007**
(21) Application number: 07102153.9
(22) Date of filing: 12.02.2007
(51) Int. Cl.: H04N 7/088

(54) **Teletext decoder, and television receiver, video player and personal computer including the same**

(30) Priority: 14.02.2006 JP 2006036267
(71) Applicant: MATSUSHITA ELECTRIC INDUSTRIAL CO., LTD, Kadoma-shi, Osaka 571-8501 (JP)
(72) Inventor: Shimazui, Atsushi, c/o Matsushita El. Ind. Co., IPROC, Chuo-ku, Osaka-shi, Osaka 540-6319 (JP)
(74) Representative: Zimmer, Franz-Josef

(57) **Abstract**

In a teletext decoder, data causing unwanted misregistration and data corresponding to Hamming code error conditions to be deleted are previously specified and stored as comparative data in a comparative data table (43). Teletext data comparing software (42) receives, as an input, teletext data from a teletext signal restoring device (13), and compares the received teletext data with the comparative data of the comparative data table. When the teletext data accords with the comparative data, matching information is transmitted to data storage controlling software (44). When the data storage controlling software receives the matching information, it does not store this according teletext data in a teletext data storage memory (22). Accordingly, in a weak electric field where Hamming code errors frequently occurs, it is possible to suppress misregistration of teletext caused because teletext data different from transmitted data appears as correctable data.

## Description

### BACKGROUND OF THE INVENTION

The present invention relates to a teletext decoder for decoding a teletext signal for use in a teletext system and also to improvement of a television receiver including the same.

Teletext signals are signals for a teletext system used in European and Asian countries employing the PAL television signal system and are defined in accordance with the standards ETSI EN300706. A teletext signal is composed of packets 0, 26, 27, 28, 29, 30 and 31 including control data and packets 1-25 including display data.

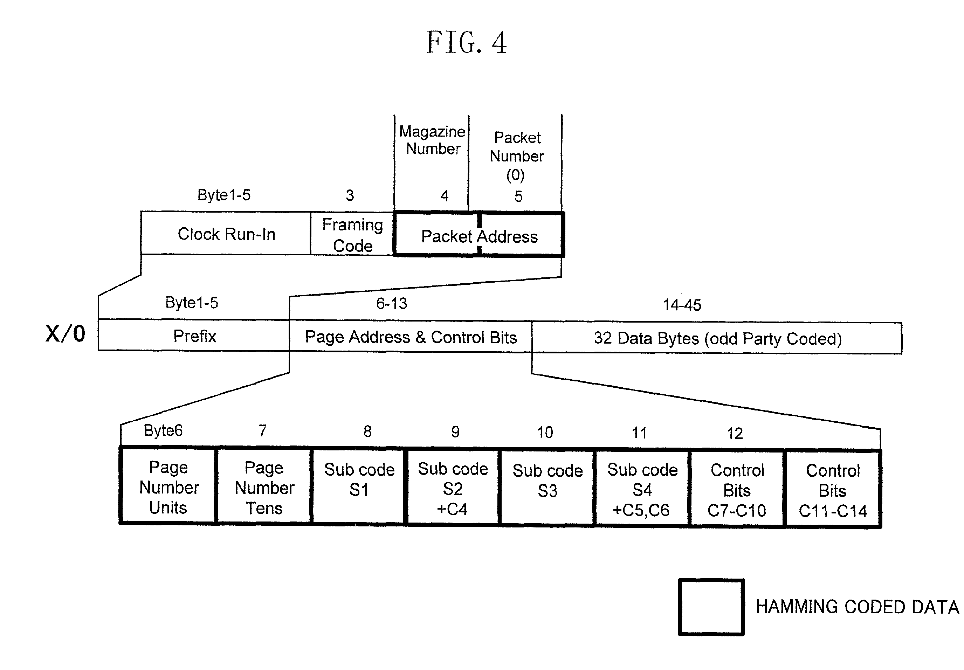

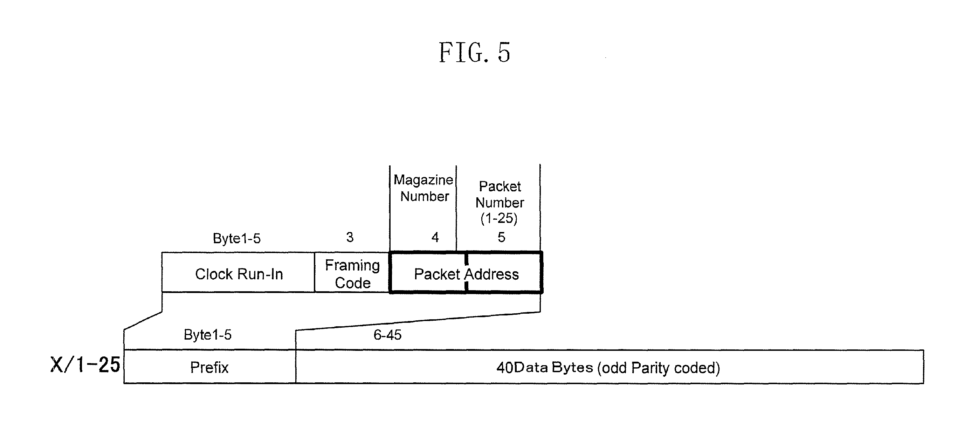

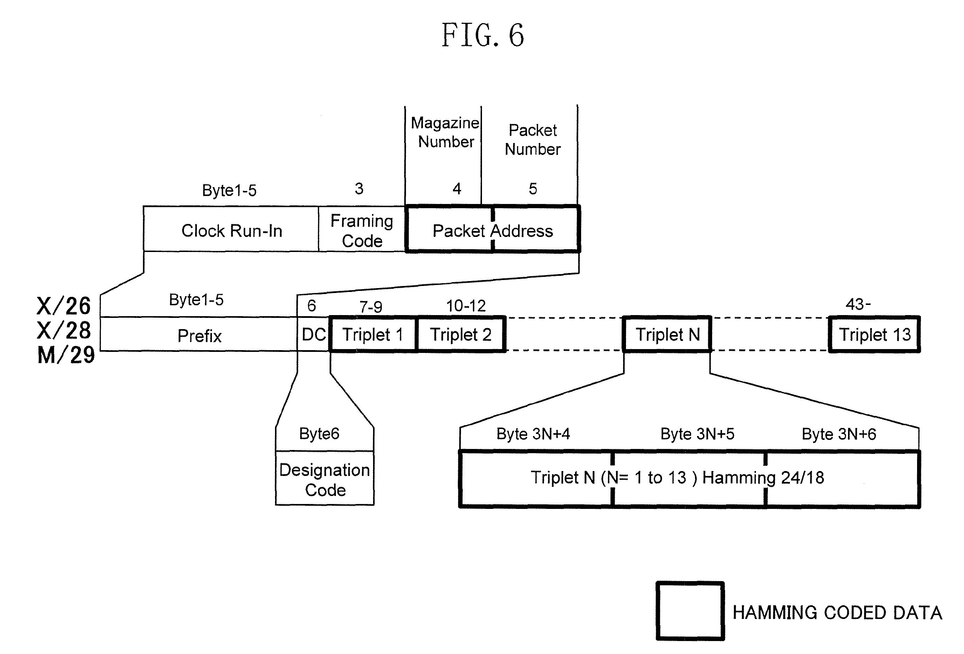

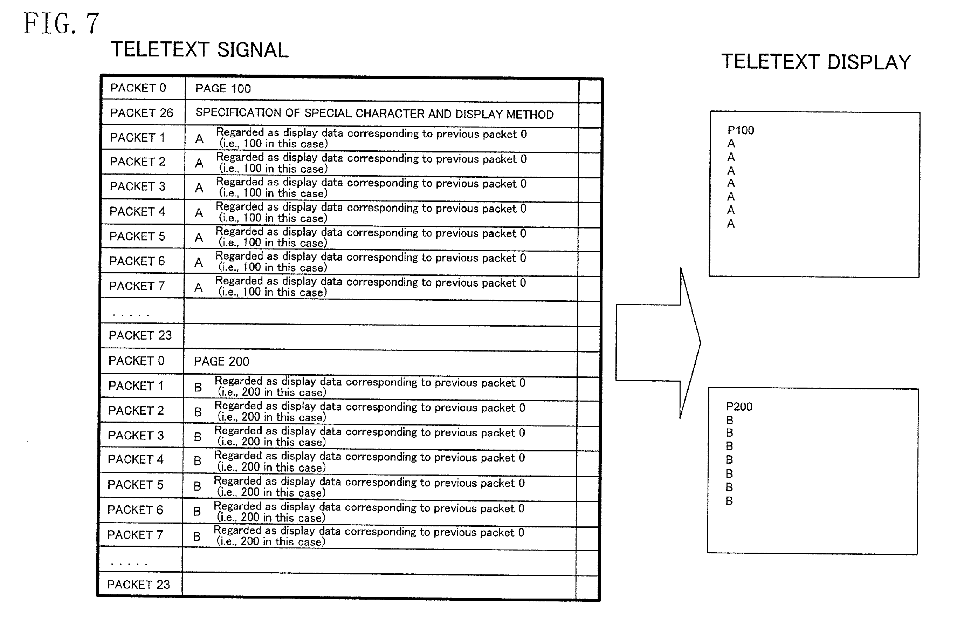

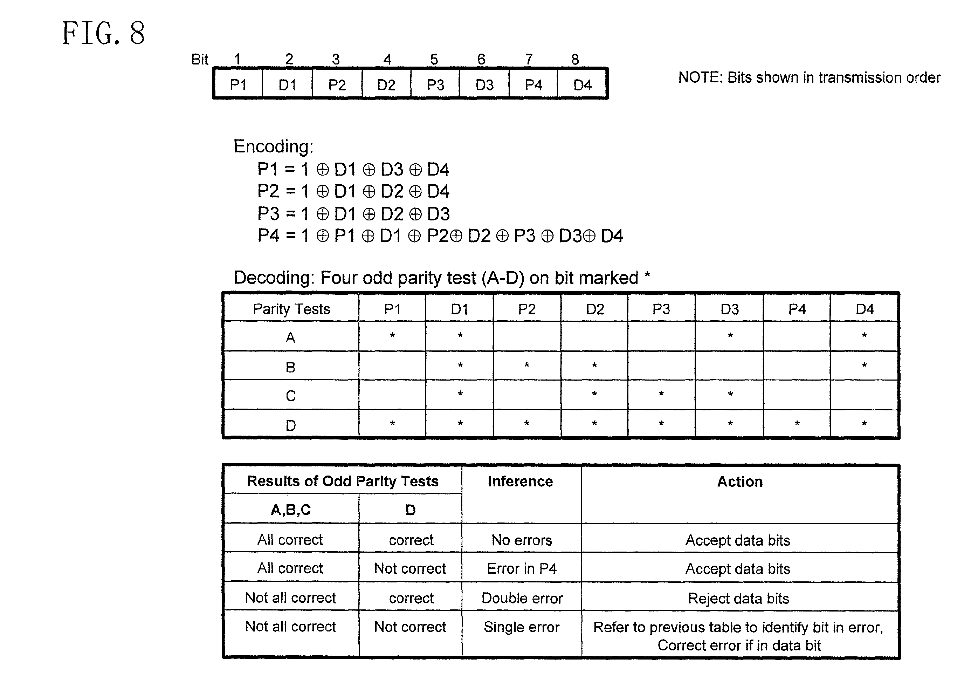

FIG **4** shows a data format of the packet 0, which includes page information and information of respective types of pages, and a portion corresponding to the information is Hamming coded. FIG. **6** shows a data format of the packets 26, 27 and 28, in which 13 triplets each of 3 bytes are stored as information on display and are Hamming coded. FIG. **5** shows a data format of the packets 1-25 where the display data is stored. FIG. **7** shows the structure of one page of teletext data, in which data from one packet 0 to the next packet 0 is dealt with as data of one page and packets 1-25 and packets 26, 27 and 28 are added if necessary. FIG **8** shows rules of Hamming coding. A transmitter transmits data in accordance with the coding rules, and a receiver can discriminate no error, a 1-bit error and a 2-bit error through computation, and the 1-bit error can be corrected.

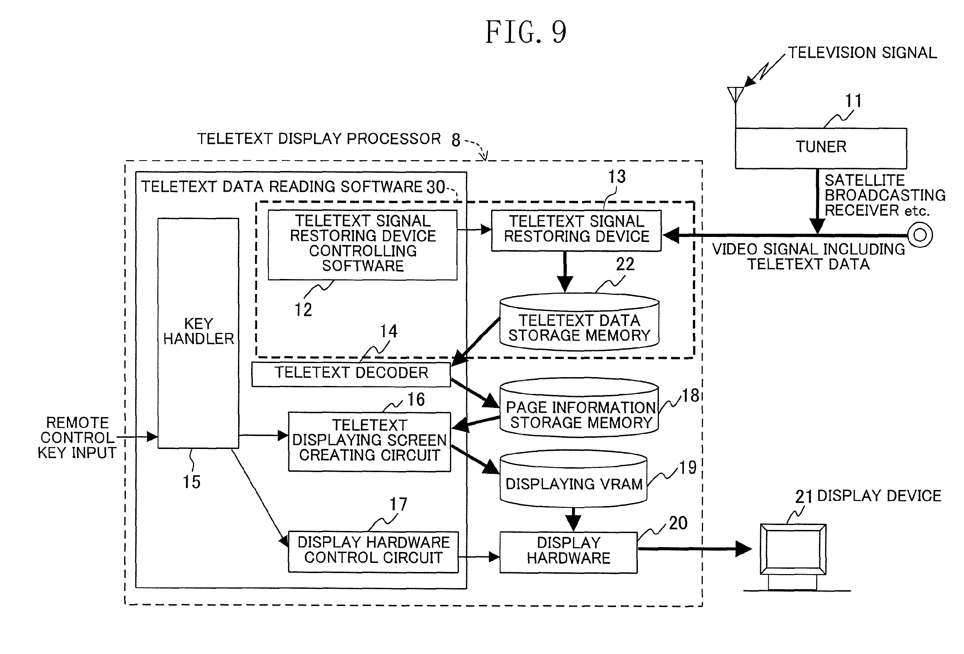

FIG. **9** shows the internal architecture of a teletext display processor **8** included in a PAL system television receiver. In general, a tuner **11** receives television signals including teletext transmitted from a broadcasting station and converts the received signals into AV signals; teletext restoring device controlling software **12** controls a teletext restoring device **13;** the teletext restoring device **13** restores teletext signals and stores the restored teletext signals in a teletext data storage memory **22;** a teletext decoder **14** receives, as an input, the teletext data stored in the memory **22** for performing Hamming code error check and correcting a 1-bit error if found, and stores the resultant data in a page information storage memory **18** as information of each page. A key handler **15** receives a remote controller key input and transmits the key signal to a teletext displaying screen creating circuit **16** and a display hardware control circuit **17;** the teletext displaying screen creating circuit **16** reads information on the specified page from the page information storage memory **18** and sends data suitable for display to a displaying VRAM **19;** and the display hardware control circuit **17** reads data from the displaying VRAM **19** and sends the signal of the read data to a display device **21** for displaying the teletext.

In the aforementioned processing, in the case where a ghost occurs or a received signal is weak, an error may be caused in the data. However, an error occurrence rate is generally low, and when merely a 1-bit error occurs, the Hamming code error correction function effectively works, and therefore, the teletext display device keeps on displaying teletext data by utilizing the correction technique even when the received signal is weak.

Japanese Laid-Open Patent Publication No. 2-30281 discloses a technique to use original error data by utilizing the above-described error correction function.

As described above, even in the case where a 1-bit error occurs, a teletext signal can keep correct display owing to the Hamming code technique.

However, when the electric field is further weakened beyond a level where a 1-bit error occurs, the error occurrence rate is increased and 2-bit error occurs. Furthermore, in the case where errors of two or more bits simultaneously occur in a further weaker electric field, data with no error may appear although the data is actually erroneous or data with a 1-bit error may appear depending upon the combination of the two or more errors. As a result, a page or a sub-page that is not actually present may be displayed, a different type of page such as a page of subtitle/news flash may appear, or a display of a level 2.5, which is not displayed at a level 1.5 Signal, may appear. In such a circumstance, it cannot be determined by the conventional technique whether or not a 1-bit error is corrected into the same data as that sent from the transmitter side, and thus, misregistration is disadvantageously caused in the teletext display.

### SUMMARY OF THE INVENTION

An object of the invention is, in a teletext decoder, producing original correct display as teletext display by definitely removing errors even when an error occurrence frequency is increased in an electric field of a signal weaker beyond the extent where a 1-bit error occurs.

In order to achieve the object, according to the present invention, data causing unwanted misregistration, Hamming code error conditions and the like are previously stored in a comparative data table, and input teletext data is compared with comparative data stored in the comparative data table, so that the teletext data according with the comparative data can be deleted or corrected.

According to one aspect of the invention, the teletext decoder of this invention is for use in receiving a teletext transmitting signal and includes a receiving part for receiving teletext data included in the teletext transmitting signal; a teletext storing part for storing the teletext data; a comparative data storing part for previously storing comparative data to be compared with teletext data for determining teletext data not to be stored in the teletext storing part; a comparing part for receiving, as inputs, the received teletext data and the comparative data of the comparative data storing part and comparing the received teletext data with the comparative data; and an excluding part for storing, in accordance with a result of comparison performed by the comparing part, merely teletext data not according with the comparative data in the teletext storing part by excluding teletext data according with the comparative data.

In one aspect of the teletext decoder, the comparative data storing part stores, as the comparative data, a Hamming code error type of Hamming protected data included in the teletext data.

In another aspect of the teletext decoder, merely when a Hamming code error type of Hamming protected data included in teletext data accords with the Hamming code error type stored in the comparative data storing part, the excluding part excludes the teletext data having the according Hamming code error type from storing in the teletext storing part.

According to another aspect of the invention, the teletext decoder of this invention is for use in receiving a teletext transmitting signal and includes a receiving part for receiving teletext data included in the teletext transmitting signal; a teletext storing part for storing the teletext data; a comparative data storing part for previously storing comparative data to be compared with teletext data for determining teletext data not to be stored in the teletext storing part and rewrite data; a comparing part for receiving, as inputs, the received teletext data and the comparative data of the comparative data storing part and comparing the received teletext data with the comparative data; and a rewriting part for rewriting, in accordance with a result of comparison performed by the comparing part, merely teletext data according with the comparative data with the rewrite data of the comparative data storing part and storing the rewritten teletext data in the teletext storing part.

In one aspect of the teletext decoder, the comparative data storing part stores, as the comparative data, a Hamming code error type of Hamming protected data included in the teletext data.

In another aspect of the teletext decoder, merely when a Hamming code error type of Hamming protected data included in teletext data accords with the Hamming code error type stored in the comparative data storing part, the rewriting part rewrites the teletext data having the according Hamming code error type.

In one aspect, the teletext decode can further include an error rate calculating part for calculating a Hamming code error rate of the received teletext data, and the excluding part excludes teletext data according with the comparative data merely when the Hamming code error rate calculated by the error rate calculating part exceeds a set value.

In another aspect, the teletext decoder can further include an error rate calculating part for calculating a Hamming code error rate of the received teletext data, and the rewriting part rewrites teletext data according with the comparative data merely when the Hamming code error rate calculated by the error rate calculating part exceeds a set value.

In one aspect of the teletext decoder, the teletext data is transmitted to another equipment.

In another aspect, the teletext decoder can further include a teletext displaying part for receiving the teletext data stored in the teletext storing part and displaying the teletext data.

The television receiver of this invention includes the teletext decoder according to any of the aforementioned aspects.

The video player of this invention includes the teletext decoder according to any of the aforementioned aspects.

The personal computer of this invention includes the teletext decoder according to any of the aforementioned aspects.

As described so far, in the teletext decoder of the present invention, data of unwanted misregistration or Hamming code error conditions are previously stored as comparative data in the comparative data storing part, and read teletext data is compared with the comparative data specified and stored in the comparative data storing part. When these data accord with each other, the read teletext data is deleted. Therefore, misregistration possibly causing a problem can be avoided so as to correctly display teletext.

Alternatively, in the teletext decoder of the present invention, the teletext data according with the comparative data stored in the comparative data storing part is rewritten into rewrite data corresponding to the according comparative data. Therefore, teletext can be originally, correctly displayed without spoiling the data order of the teletext.

More specifically, for example, a packet number, data position and a value of unwanted teletext data are previously stored as the contents of comparative data, and teletext data according with this comparative data can be understood to have a 1-bit Hamming code error. Therefore, the teletext data is excluded from storing in a memory or rewritten into teletext data with a 2-bit error that is not used in the teletext decoder. Accordingly, in a condition where no Hamming code error occurs, the teletext data can be dealt with as original display data, and in a condition where any Hamming code error occurs, the teletext data is discriminated as a Hamming code error, so as to secure correct text display.

Furthermore, according to the present invention, only when the Hamming code error occurrence rate is higher than a set value, the teletext data is excluded or rewritten in the aforementioned manner. Therefore, if a broadcasting station adds a Hamming code error in data transmission, a signal with the Hamming code error can be correctly displayed in a general electric field.

### BRIEF DESCRIPTION OF THE DRAWINGS

FIG. **1** is a diagram for showing the whole architecture of a teletext decoder according to Embodiment 1 of the invention.
FIG. **2** is a diagram for showing the whole architecture of a teletext decoder according to Embodiment 2 of the invention.
FIG. **3** is a diagram for showing the whole architecture of a teletext decoder according to Embodiment 3 of the invention.
FIG. **4** is a diagram for showing a data format of a packet 0 included in a teletext signal.
FIG. **5** is a diagram for showing a data format of packets 1-25 included in a teletext signal.
FIG. **6** is a diagram for showing a data format of packets 26, 28 and 29 included in a teletext signal.
FIG. **7** is a diagram for showing the structure of page data of a teletext signal.
FIG. **8** is a diagram for showing Hamming coding and restoring rules for a teletext signal.
FIG. **9** is a diagram for showing the whole architecture of a conventional teletext display device.
FIG. **10** is an operation flowchart of the teletext decoder of Embodiment 1.
FIG. **11** is a diagram for showing a detailed flow of data comparing process performed in the operation flowchart.
FIG. **12** is an operation flowchart of the teletext decoder of Embodiment 2.
FIG. **13** is an operation flowchart of the teletext decoder of Embodiment 3.
FIG. **14** is a diagram for showing a detailed flow of data rewriting process performed in the operation flowchart of FIG. **12.**
FIG **15** is a diagram of an exemplified format of a comparative data table included in the teletext decoder of Embodiment 1.
FIG. **16** is a diagram of an exemplified format of a rewrite data table included in the teletext decoder of Embodiment 2.
FIG. **17** is a diagram of a specific example of Embodiment 1 of the invention.
FIG. **18** is a diagram of a specific example of Embodiment 2 of the invention.
FIG. **19** is a diagram of a specific example of Embodiment 3 of the invention.

### DETAILED DESCRIPTION OF THE INVENTION

Preferred embodiments of a teletext decoder according to the present invention will now be described with reference to the accompanying drawings.

### EMBODIMENT 1

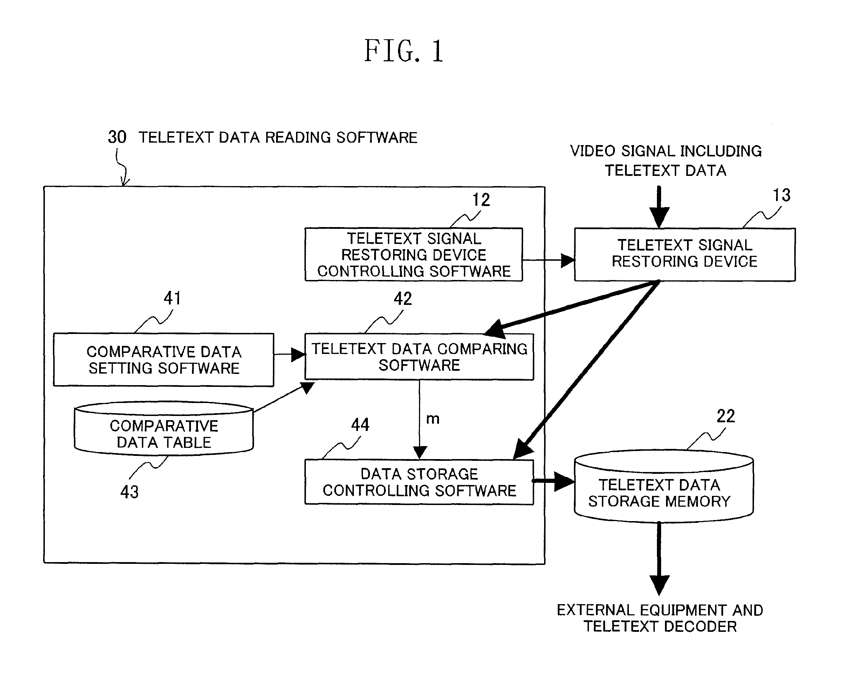

FIG. **1** is a schematic diagram of a teletext decoder according to Embodiment 1 of the invention. Since the whole architecture of a teletext display device using this teletext decoder is similar to that shown in FIG. **9,** the description is herein omitted. In the whole teletext display device of FIG. **9,** the teletext decoder of FIG. **1** corresponds to teletext data reading software **30,** shown with a broken line in FIG. **9,** to be executed by a computer.

In FIG. **1,** a teletext signal restoring device (receiving part) **13** receives a television signal or a video signal including teletext data. Comparative data setting software **41** reads comparative data from a comparative data table **43** and sets the read comparative data in teletext data comparing software (comparing part) **42.** The teletext data comparing software **42** receives, as an input, the teletext data from the teletext signal restoring device **13,** and compares the teletext data with the comparative data set therein as described above, and when these data accord with each other, it sends matching information **m** to data storage controlling software (excluding part) **44.** When the data storage controlling software **44** receives the matching information **m,** it stops to store the according teletext data in a teletext data storage memory (teletext storing part) **22,** and when it does not receive the matching information **m,** it stores the teletext data in the teletext data storage memory **22.** The teletext data stored in the teletext data storage memory **22** is transmitted to another equipment such as a television receiver, a video player or a personal computer for displaying the teletext, so as to be displayed on a teletext display device (teletext displaying part) of the equipment.

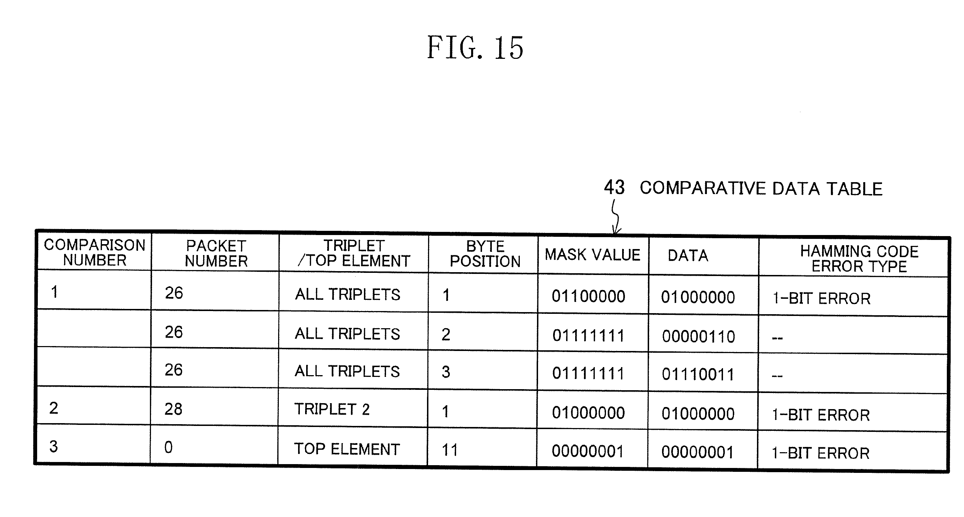

FIG. **15** shows a data format of data to be stored in the comparative data table (comparative data storing part) **43.** In FIG. **15,** comparative data is data of unwanted misregistration or data corresponding to Hamming code error conditions, and is composed of a comparison number, a packet number, triplet/top element, a byte position, a mask value to be used in the comparison, data to be compared and a Hamming code error type.

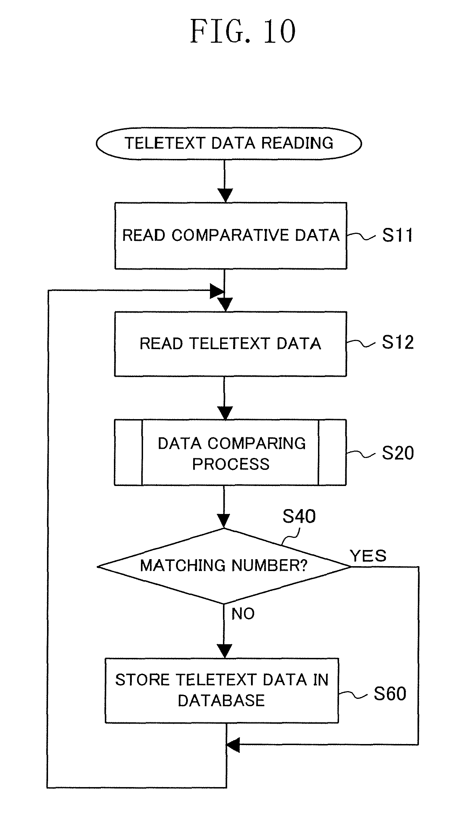

FIG **10** shows a software structure for explaining the operation of the teletext decoder of this embodiment. In FIG **10,** comparative data is read from the comparative data table **43** in step S11, teletext data is read from the teletext signal restoring device **13** in step S12, and then, these read data are compared in step S20. Thereafter, it is checked whether or not there is a comparison number (a matching signal) according with the teletext data, and when NO, this teletext data is stored in the teletext data storage memory **22** in step S60. On the other hand, when YES, the procedure returns to step S12 for processing next teletext data without storing this teletext data.

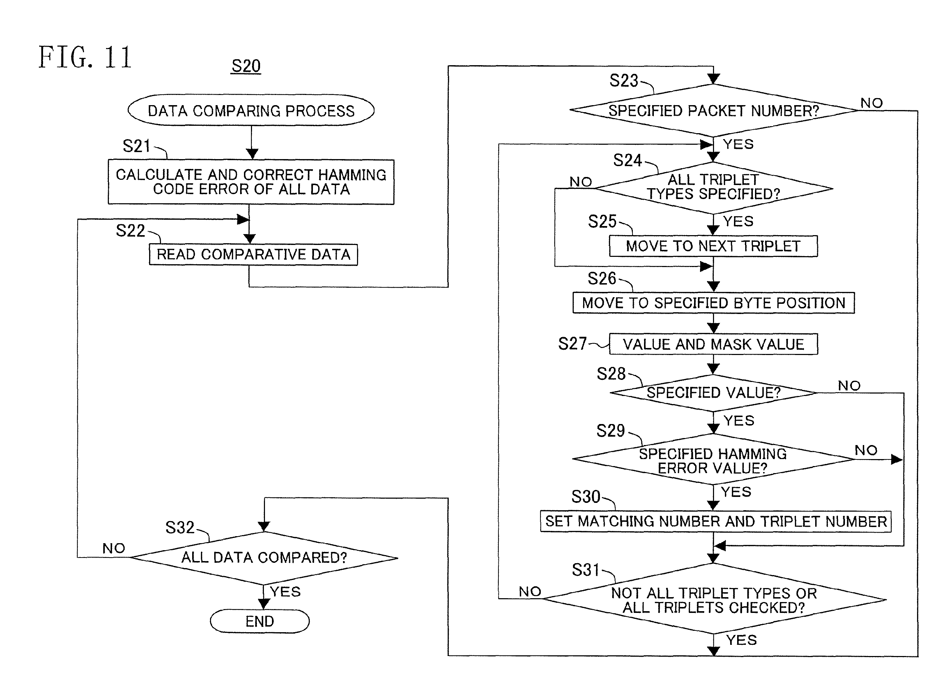

FIG. **11** shows the details of the data comparing process performed in step S20. In FIG. **11**, in step S21, Hamming coded data included in the read teletext data is calculated and corrected for a Hamming code error. In step S22, comparative data are successively read from the comparative data table **43** in the ascending order from first data.

Next, in step S23, it is checked whether or not the packet number of the teletext data resulting from the calculation and the correction accords with a packet number included in the comparative data, and when the packet numbers do not accord with each other, the procedure directly proceeds to step S32. On the other hand, when the packet numbers accord with each other, it is checked whether or not the teletext data is a triplet, and if it is a triplet, the type of the triplet is checked in step S24. Only when all the types of triplets are specified, a next triplet is checked in step S25. Thereafter, a byte position of the teletext data corresponding to the comparative data is specified in step S26, and an AND of the byte value and a mask value corresponding to the comparative data are obtained in step S27. Furthermore, it is checked in step S28 whether or not the result of the AND obtained in step S27 accords with data corresponding to the comparative data. Only when YES, it is checked in step S29 whether or not a Hamming code error accords with a Hamming code error type corresponding to the comparative data. When YES, the comparison number having the according Hamming code error is set as a matching number and a triplet number is set in step S30.

Thereafter, it is checked in step S31 whether or not all the triplets of teletext data are not to be compared or whether or not all the triplets have been checked. When YES, the procedure proceeds to step S32, and when NO, it proceeds to step S24. When it is determined in step S32 that all the comparative data have been checked, the process is completed, and when it is determined that there still remains comparative data to be checked, the procedure returns to step S22 for continually performing the process. Accordingly, in the case where any teletext data has been found to accord with comparative data when the process is completed, the matching number and the triplet number have been set.

Accordingly, when input teletext data accords with any comparative data included in the comparative data table **43,** which corresponds to a case where unwanted misregistration is caused, the data storage controlling software **44** does not store the according teletext data in the storage memory **22** in this embodiment, and therefore, the unwanted misregistration can be definitely avoided.

### EMBODIMENT 2

Next, a teletext decoder according to Embodiment 2 of the invention will be described.

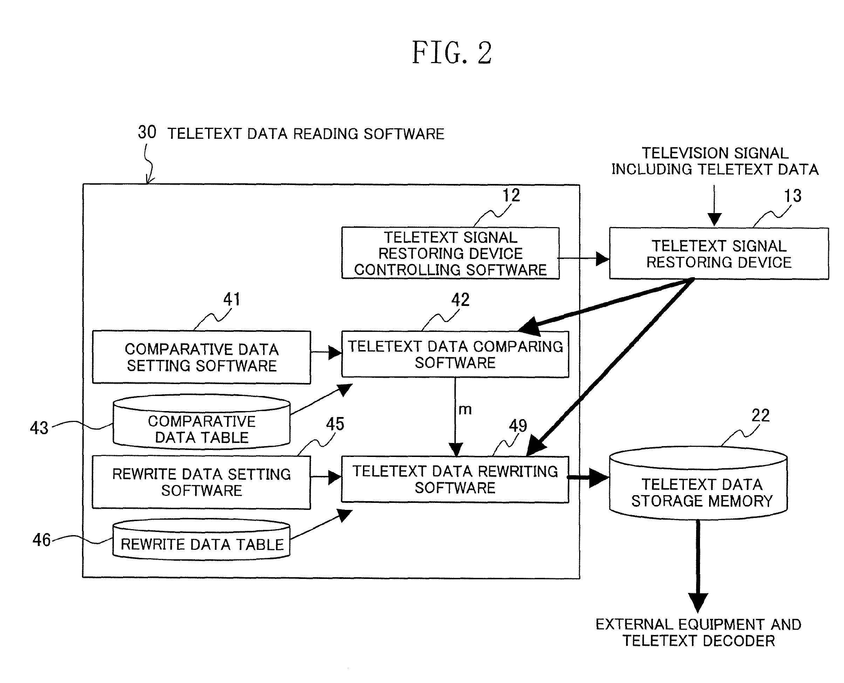

FIG. **2** is a schematic diagram of the teletext decoder of this embodiment. In FIG. **2,** comparative data setting software **41** reads comparative data as shown in FIG. **15** from a comparative data table **43,** and sets the read comparative data in teletext data comparing software **42.** The teletext data comparing software **42** receives, as an input, teletext data from a teletext signal restoring device **13** and compares the teletext data with the comparative data, and when these data accord with each other, it transmits matching information **m** to teletext data rewriting software (rewriting part) **49.** Rewrite data setting software **45** reads rewrite data from a rewrite data table **46** and sets the read rewrite data in the teletext data rewriting software **49.** When the teletext data rewriting software **49** receives the matching information **m** from the teletext data comparing software **42,** it rewrites the teletext data in accordance with the rewrite data set therein.

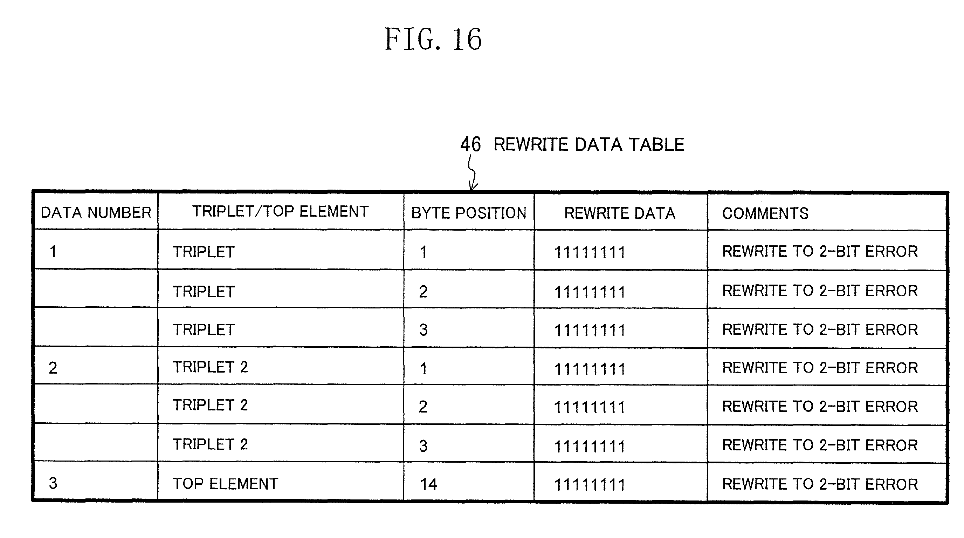

FIG. **16** shows a data format of rewrite data to be stored in the rewrite data table **46.** In FIG. **16,** a data number, triplet/top element to be rewritten, a byte position, rewrite data to be replaced with and the content of the rewrite data (comment) are previously stored in the rewrite data table.

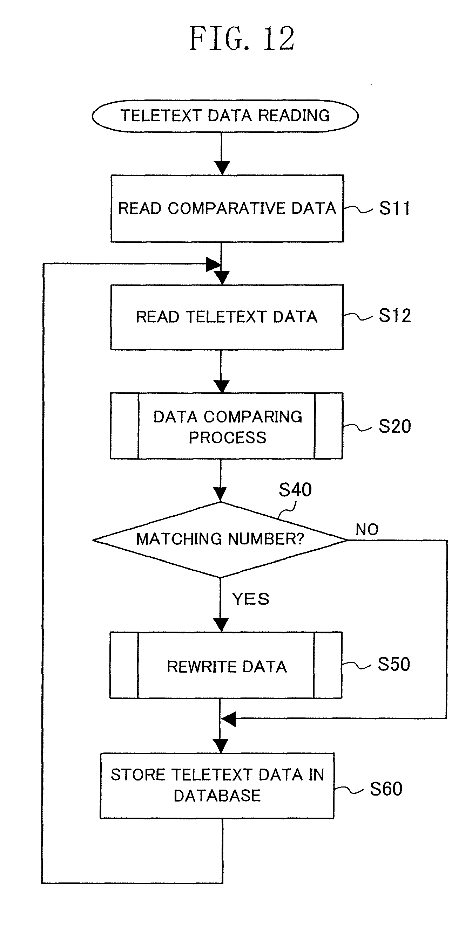

FIG. **12** shows a software structure for explaining the operation of the teletext decoder of this embodiment. In FIG. **12,** comparative data is read from the comparative data table **43** in step S11, teletext data is read in step S12, and the teletext data is compared with the comparative data in step S20. Then, it is checked in step S40 whether or not there is a matching number, and when there is a matching number, the teletext data is rewritten in step S50, and when there is no matching number, the teletext data is not rewritten. Thereafter, the teletext data with no error or the teletext data having been rewritten is stored in a teletext data storage memory **22,** and then, the procedure returns to step S12.

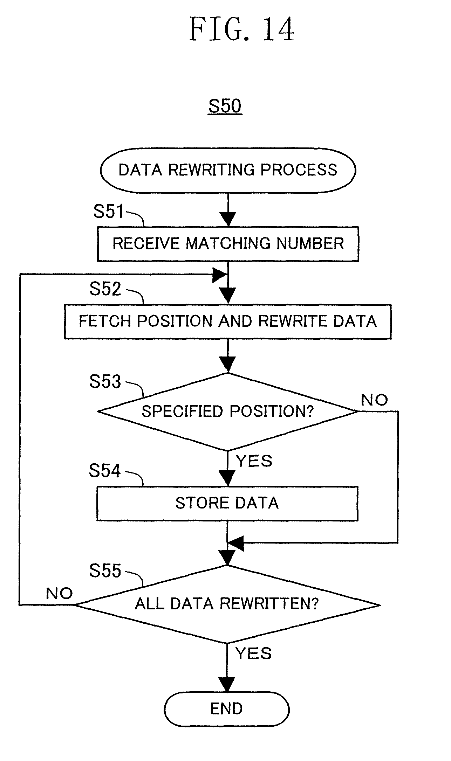

FIG **14** shows the details of the data rewriting process performed in step S50 of FIG. **12.** In FIG **14,** a data matching number and a triplet position supplied from an upper function are received in step S51. Rewrite data is fetched from the rewrite data table **46** in step S52, and thereafter, a corresponding triplet number and a corresponding byte position of the teletext data are specified in step S53. After rewriting data of the triplet number and the byte position with the rewrite data in step S54, the teletext data resulting from the rewrite is stored in the teletext data storage memory **22.** It is checked in step S55 whether or not all the teletext data have been rewritten and stored, and when YES, the process is completed, and when NO, the procedure returns to step S52 for repeating the aforementioned processing.

Accordingly, in the case where input teletext data accords with any comparative data included in the comparative data table **43** to cause misregistration, a part of the teletext data causing the misregistration is rewritten into correct data with rewrite data included in the rewrite data table **46** in this embodiment. Therefore, correct display can be produced without spoiling the order of continuous teletext data.

### EMBODIMENT 3

Subsequently, a teletext decoder according to Embodiment 3 of the invention will be described.

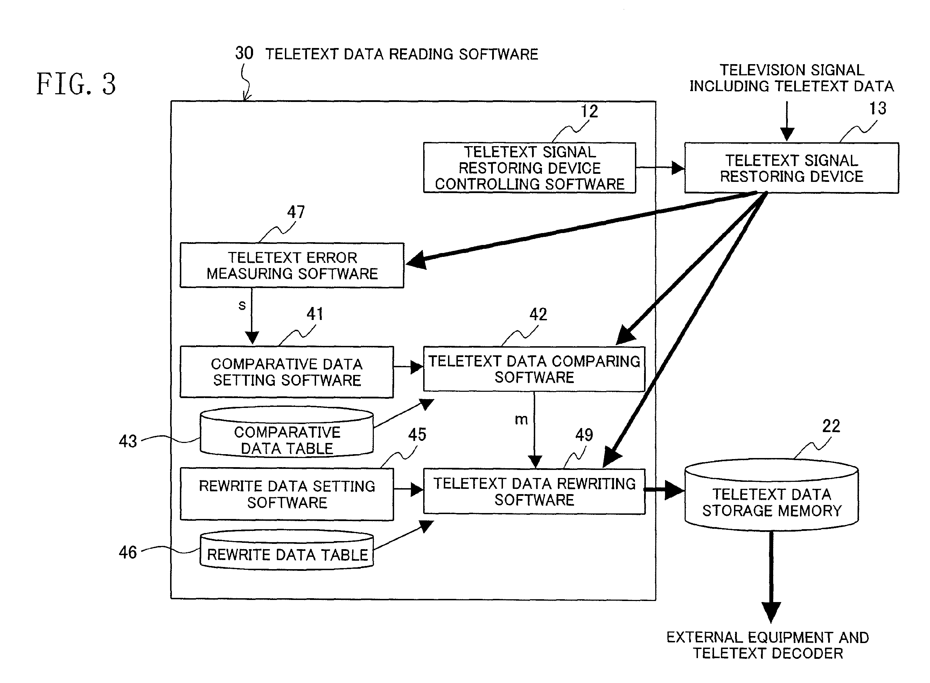

FIG. **3** is a schematic diagram of the teletext decoder of this embodiment. In FIG. **3,** comparative data setting software **41** reads comparative data from a comparative data table **43,** and sets the read comparative data in teletext data comparing software **42.** Teletext error measuring software (error rate calculating part) **47** successively receives, as inputs, teletext from a teletext signal restoring device **13,** measures a Hamming code error occurrence rate of the received teletext, and merely when the measured error occurrence rate exceeds an error rate previously set therein, it outputs a seizing signal s to the teletext data comparing software **42.** The teletext data comparing software **42** starts a data comparing operation in response to the seizing signal **s** received from the teletext error measuring software **47** for comparing the input teletext data with the comparative data. When these data accord with each other, it transmits matching information **m** to teletext data rewriting software **49.** Rewrite data setting software **45** reads rewrite data corresponding to a data matching number from a rewrite data table **46** and sets the read rewrite data in the teletext data rewriting software **49.** The teletext data rewriting software **49** rewrites the teletext data in a given byte position in accordance with the rewrite data merely when the matching information **m** is received from the teletext data comparing software **42.**

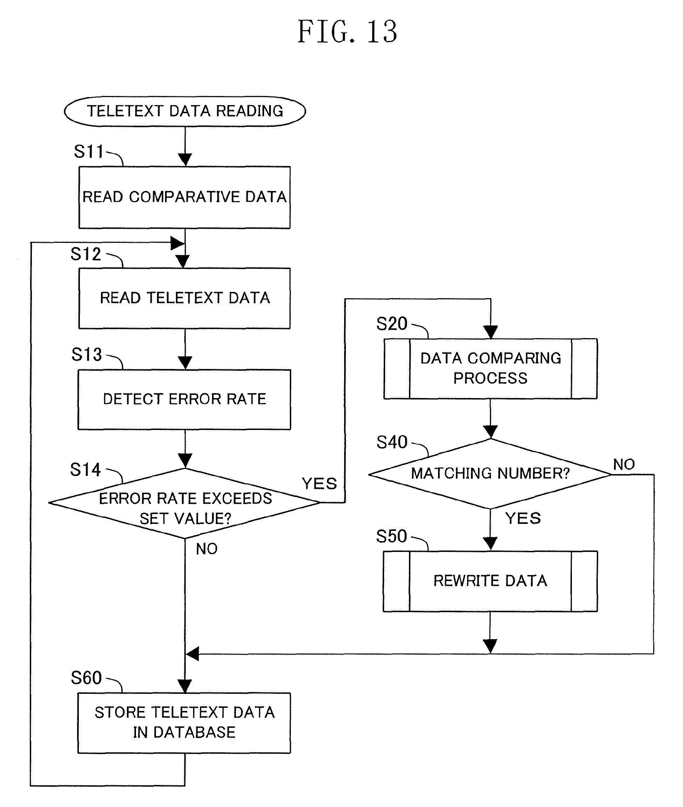

FIG. **13** shows a software structure of the teletext decoder of FIG. **3**. In FIG. **13**, comparative data is read from the comparative data table **43** in step S11, teletext data is read in step S12, and thereafter, an error rate of continuous teletext data is detected in step S 13. Then, when it is determined in step S 14 that the detected error rate is smaller than a previously set value, the procedure proceeds to step S60. On the other hand, when the detected error rate exceeds the set value, data comparison is started in step S20. It is checked in step S40 whether or not there is a matching number, and when YES, the data is rewritten in step S50, and when NO, the data is not rewritten. Thereafter, the teletext data with no error or having been rewritten is stored in the teletext data storage memory **22** in step S60, and the procedure returns to step S12.

Accordingly, when the error rate of teletext data is smaller than the set value, namely, in a strong or general electric field where errors are minimally caused, data comparison is not performed in this embodiment. Therefore, teletext data having a Hamming code error is definitely judged as an error in a weak electric field where errors are occasionally caused, so as to prevent misregistration, and correct teletext data with a strong electric field is dealt with as original display data,.

### Examples:

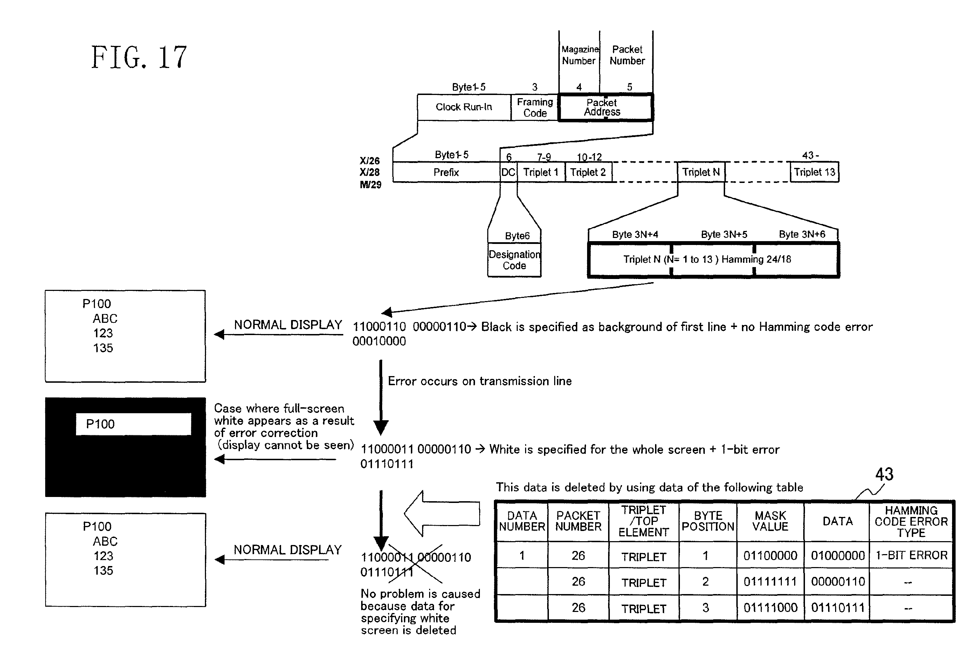

Specific examples of the embodiments are shown in FIGS. **17, 18** and **19.**

FIG. **17** shows a case where data is corrected by changing a signal of teletext 1.5 into a signal of teletext 2.5 in Embodiment 1. When such a signal is received, there is a possibility that display is produced in the same color in the whole screen, which is disadvantageous to the display. In this case, the signal of which data is corrected can be deleted by setting data of the signal of which data is corrected as comparative data, and thus, the disadvantage of the display can be overcome.

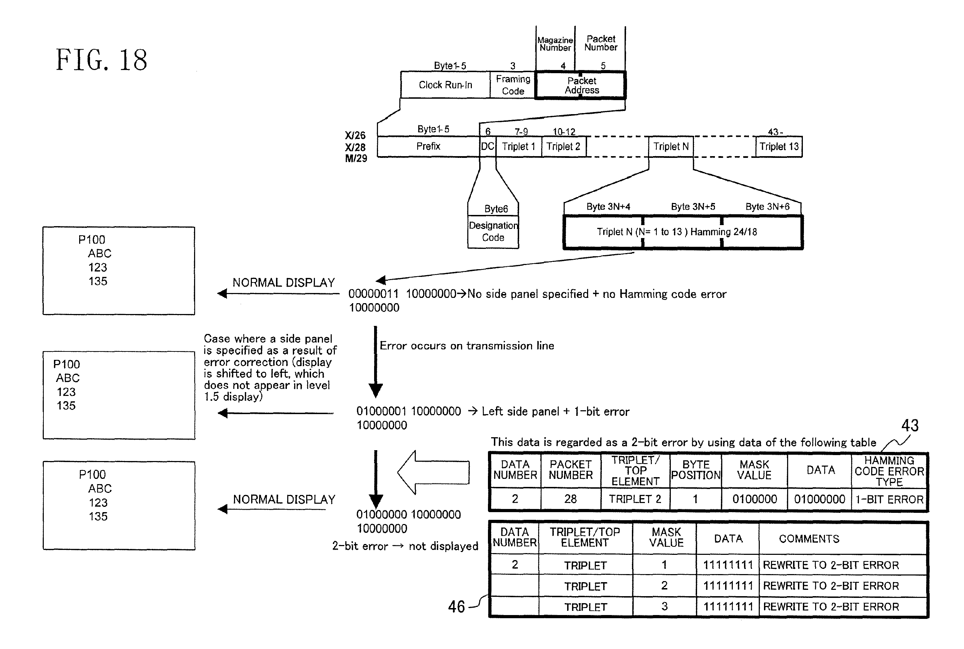

FIG. **18** shows a case where data is corrected by changing a signal of teletext 1.5 into a signal of teletext 2.5 in Embodiment 2. In this example, when such a signal is received, a side panel not included in the teletext 1.5 is made effective. When the side panel becomes effective, display moves in the lateral direction, which is disadvantageous to the display. In this example, the signal of which data is corrected is judged as an error by setting data of the signal of which data is corrected as comparative data, and thus, the disadvantage of the display can be overcome.

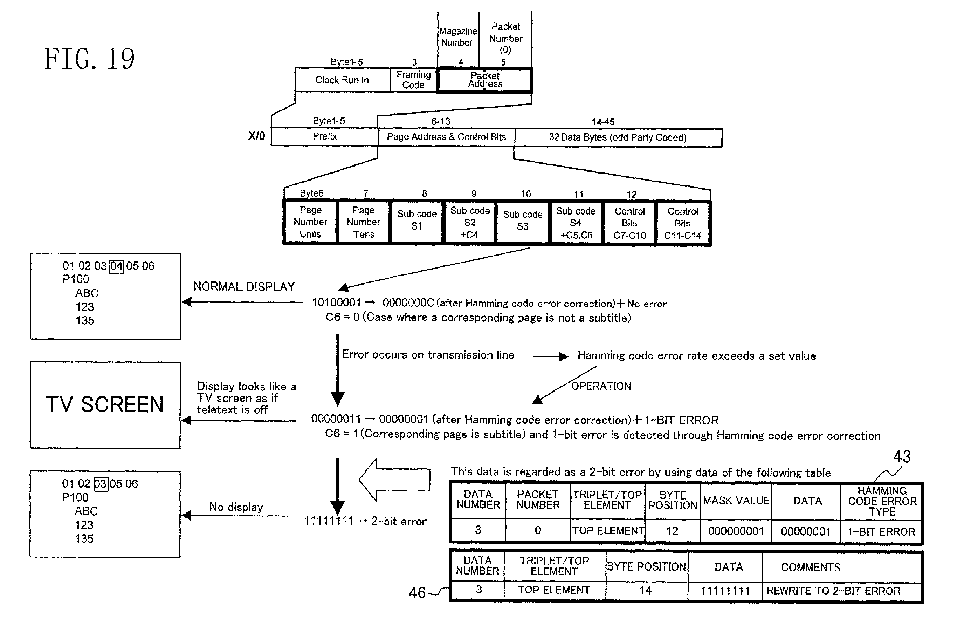

In the example of FIG **19,** a case where a page not corresponding to a subtitle is dealt with as a subtitle page is avoided in Embodiment 3. When such a subtitle page is displayed, it may be misunderstood that a television screen is displayed if no character string is displayed, which is disadvantageous. In the case where a byte 12 of a packet 0 has a 1-bit error when the last bit of the byte 12 is 1, the 1-bit error is regarded as a 2-bit error, and thus, this disadvantage can be avoided. In this case, the aforementioned function works merely when the Hamming code error rate exceeds the set value, and therefore, if a broadcasting station transmits data including a Hamming code error, an error does not occur in the display but the data is displayed as it is when the signal has a strong electric field.

## Claims

1. A teletext decoder for use in receiving a teletext transmitting signal, comprising:
a receiving part for receiving teletext data included in said teletext transmitting signal;
a teletext storing part for storing said teletext data;
a comparative data storing part for previously storing comparative data to be compared with teletext data for determining teletext data not to be stored in said teletext storing part;
a comparing part for receiving, as inputs, said received teletext data and said comparative data of said comparative data storing part and comparing said received teletext data with said comparative data; and
an excluding part for storing, in accordance with a result of comparison performed by said comparing part, merely teletext data not according with said comparative data in said teletext storing part by excluding teletext data according with said comparative data.

2. The teletext decoder of Claim 1,
wherein said comparative data storing part stores, as said comparative data, a Hamming code error type of Hamming protected data included in said teletext data.

3. The teletext decoder of Claim 2,
wherein merely when a Hamming code error type of Hamming protected data included in teletext data accords with the Hamming code error type stored in said comparative data storing part, said excluding part excludes said teletext data having the according Hamming code error type from storing in said teletext storing part.

4. A teletext decoder for use in receiving a teletext transmitting signal, comprising:
a receiving part for receiving teletext data included in said teletext transmitting signal;
a teletext storing part for storing said teletext data;
a comparative data storing part for previously storing comparative data to be compared with teletext data for determining teletext data not to be stored in said teletext storing part and rewrite data;
a comparing part for receiving, as inputs, said received teletext data and said comparative data of said comparative data storing part and comparing said received teletext data with said comparative data; and
a rewriting part for rewriting, in accordance with a result of comparison performed by said comparing part, merely teletext data according with said comparative data with said rewrite data of said comparative data storing part and storing said rewritten teletext data in said teletext storing part.

5. The teletext decoder of Claim 4,
wherein said comparative data storing part stores, as said comparative data, a Hamming code error type of Hamming protected data included in said teletext data.

6. The teletext decoder of Claim 5,
wherein merely when a Hamming code error type of Hamming protected data included in teletext data accords with the Hamming code error type stored in said comparative data storing part, said rewriting part rewrites said teletext data having the according Hamming code error type.

7. The teletext decode of Claim 3, further comprising an error rate calculating part for calculating a Hamming code error rate of said received teletext data,
wherein said excluding part excludes teletext data according with said comparative data merely when said Hamming code error rate calculated by said error rate calculating part exceeds a set value.

8. The teletext decoder of Claim 6, further comprising an error rate calculating part for calculating a Hamming code error rate of said received teletext data,
wherein said rewriting part rewrites teletext data according with said comparative data merely when said Hamming code error rate calculated by said error rate calculating part exceeds a set value.

9. The teletext decoder of any of Claims 1 through 8,
wherein said teletext data is transmitted to another equipment.

10. The teletext decoder of any of Claims 1 through 8, further comprising a teletext displaying part for receiving said teletext data stored in said teletext storing part and displaying said teletext data.

11. A television receiver comprising the teletext decoder of any of Claims 1 through 10.

12. A video player comprising the teletext decoder of any of Claims 1 through 10.

13. A personal computer comprising the teletext decoder of any of Claims 1 through 10.
